# EUROPÄISCHE PATENTANMELDUNG

(11) **EP 2 808 457 A2**
(43) Veröffentlichungstag der Anmeldung: **03.12.2014**
(21) Anmeldenummer: 14001856.5
(22) Anmeldetag: 28.05.2014
(51) Int. Cl.: E03F 5/04, F16B 5/02, F16B 5/06

(54) **Wasserablaufvorrichtung für eine sanitäre Anlage, wie einen bodenebenen Duschplatz**

(30) Priorität: 29.05.2013 DE 102013105544
(71) Anmelder: wedi GmbH, 48282 Emsdetten (DE)
(72) Erfinder: Wedi, Stephan, 48282 Emsdetten (DE)
(74) Vertreter: Hoffmeister, Helmut

(57) **Zusammenfassung**

Die Erfindung betrifft eine Wasserablaufvorrichtung (100) für eine sanitäre Anlage, wie einen bodenebenen Duschplatz, umfassend
- ein wannenförmiges Wasserablaufelement (3), welches strömungstechnisch mit einem Ablaufrohr verbunden oder verbindbar ist;
- eine in das Wasserablaufelement (3) eingesetzte Rinnenabdeckung (4), die im montierten Zustand das Wasserablaufelement (3) nach oben hin abdeckt, wobei in oder an der Rinnenabdeckung mindestens eine Öffnung zur Einleitung von Abwasser in das Wasserablaufelement (3) verbleibt;
- wenigstens eine Höhenverstelleinrichtung (10.1) für die Rinnenabdeckung (4), umfassend ein Fußteil (2) und ein gegenüber dem Fußteil (2) höhenverstellbares Kopfteil.

Das Kopfteil weist ein zur Rinnenabdeckung (4) kompatibles, dem Fußteil (2) abgewandtes Auflageelement auf, welches mit der Rinnenabdeckung (4) kraft- oder formschlüssig verbunden ist,
- wobei das Wasserablaufelement (3) wenigstens eine Vertiefung (6) aufweist, an der sich das Fußteil (2) lose abstützt,
- und wobei die gesamte Höhenverstelleinrichtung (10.1) mit der Rinnenabdeckung (4) gemeinsam aus dem rinnenförmigen Wasserablaufelement (3) entnehmbar und in das Wasserablaufelement (3) einsetzbar ist.

## Beschreibung

Die Erfindung betrifft eine Wasserablaufvorrichtung für eine sanitäre Anlage, wie einen bodenebenen Duschplatz, umfassend
- ein im montierten Zustand nach oben hin offenes, längliches, wannenförmiges Wasserablaufelement, an welches ein Ablaufrohr angeschlossen oder anschließbar ist;
- eine in das Wasserablaufelement eingesetzte Rinnenabdeckung, die im montierten Zustand das Wasserablaufelement nach oben hin abdeckt, wobei in oder an der Rinnenabdeckung mindestens eine Öffnung zur Einleitung von Abwasser in das Wasserablaufelement verbleibt;
- wenigstens eine Höhenverstelleinrichtung für die Rinnenabdeckung, umfassend ein Fußteil und ein gegenüber dem Fußteil höhenverstellbares Kopfteil.

Eine Wasserablaufvorrichtung der eingangs genannten Art ist in DE 20 2010 007 534 U1 der Anmelderin gezeigt. Das Fußteil stellt einen glatten, in Richtung Rinnenabdeckung ragenden, geringfügig konischen Bolzen dar, welcher an dem Wasserablaufelement angeordnet ist. Nachteilig bei der bekannten Wasserablaufvorrichtung ist, dass das Fußteil nach der Entnahme der Rinnenabdeckung am Wasserablaufelement - nach oben ragend - verbleibt, wodurch der Reinigungsvorgang erschwert ist.

Weiterhin ist aus DE 10 2004 049 944 A1 eine höhenverstellbare Wasserablaufvorrichtung bekannt, umfassend eine Mehrzahl von Haltemitteln mit Gewindebolzen und - hülse. Die Gewindehülse ist auf einem Boden einer Ablaufwanne befestigt. Die nach oben ragenden Gewindehülsen können sich ebenfalls aus demselben Grund als nachteilig erweisen.

Es stellt sich demnach die Aufgabe, eine neuartige Wasserablaufvorrichtung mit einem verbesserten Zugang zur Reinigung und Inspektion zu konzipieren. Die Wasserablaufvorrichtung soll auch ein einfaches Entnehmen und Einsetzen der Rinnenabdeckung zusammen mit der Höhenverstelleinrichtung mit einem Handgriff werkzeuglos ermöglichen.

Diese Aufgabe ist durch eine Wasserablaufvorrichtung der im Oberbegriff des 1. Anspruchs genannten Art gelöst, bei der
- das Kopfteil ein zur Rinnenabdeckung kompatibles, dem Fußteil abgewandtes Auflageelement aufweist, welches mit der Rinnenabdeckung kraft- oder formschlüssig verbunden ist,
- das Wasserablaufelement wenigstens eine Vertiefung aufweist, an der sich das Fußteil lose abstützt,
- wobei die gesamte Höhenverstelleinrichtung mit der Rinnenabdeckung gemeinsam aus dem rinnenförmigen Wasserablaufelement entnehmbar und in das Wasserablaufelement einsetzbar ist.

Die Rinnenabdeckung kann eben und streifenförmig, wie ein Abschnitt eines Flacheisens, oder profiliert sein. Bei der profilierten Rinnenabdeckung handelt es sich vorzugsweise um ein C-Profil. Die Verwendung anderer Profilarten, wie beispielsweise eines H- oder U-Profil, ist jedoch auch möglich.

Das Auflageelement kann ein Abschnitt eines C- oder U-Profils sein, welches ins Innere der Rinnenabdeckung passt. So entsteht eine kraftschlüssige Verbindung der Rinnenabdeckung mit dem Auflageelement, welche durch einfaches Klemmen realisiert werden kann. Geklemmt wird beispielsweise zwischen den U-Schenkeln des Auflageelementes und der Rinnenabdeckung. Die klemmende Wirkung kann dadurch unterstützt werden, dass die U-Schenkel des Auflageelementes eine größere Elastizität als die der Rinnenabdeckung aufweisen und sich unter Spannung verformen.

Das Auflageelement kann eine Rastverbindung mit der Rinnenabdeckung eingehen, indem wenigstens ein Rastvorsprung in eine entsprechende Aussparung des Gegenelementes eingreift. Vorzugsweise sind die Rastvorsprünge an den U-Schenkeln des Auflageelementes und Aussparungen an den U-Schenkeln der Rinnenabdeckung angeordnet.

In einer abweichenden Ausführungsform kann das Auflageelement wenigstens punktweise mit der Rinnenabdeckung verklebt sein. Ebenfalls ist es möglich, das Auflageelement in die Rinnenabdeckung stofflich zu integrieren, wenn die beiden Teile in einem Materialstück, beispielsweise aus thermoplastischem Kunststoff hergestellt sind.

Ein wesentliches Merkmal der Erfindung ist also eine lösbare Unterbringung des Fußteils in der Vertiefung des wannenförmigen Wasserablaufelementes unter Gewährung einer ausreichenden Lagestabilität der Rinnenabdeckung. Um das Ziel zu erreichen, wird eine formschlüssige Verbindung des Fußteils mit der Vertiefung vorgeschlagen.

Die formschlüssige Verbindung des Fußteils mit der Vertiefung kann im vorliegenden Fall aus zwei zueinander koaxialen Zylinderflächen, wie etwa einen in ein Sackloch gesteckten Bolzen, bestehen. Dabei entsteht ein Formschluss in allen Richtungen einer zur Zylinderachse senkrechten Ebene. Die Zylinderflächen können abgestuft oder mit konisch ausgebildeten, miteinander kontaktierenden Flächen kombiniert sein. Der Formschluss setzt einen spielfreien bzw. nahezu spielfreien Kontakt der beiden Flächen voraus. Die formschlüssige Verbindung kann auch durch zwei zueinander kompatible ovale, nierenförmige oder polygonale Flächen gebildet sein. Auf jeden Fall kann das Fußteil und damit die ganze Höhenverstelleinrichtung samt Rinnenabdeckung aus der Vertiefung mit einem Handgriff herausgenommen und wieder eingesetzt werden.

Das Kopfteil kann mit dem Fußteil eine Schraubverbindung, eine Rastverbindung, insbesondere federnde Rastverbindung, oder eine kombinierte Schraubverbindung bilden, bei der das über das Fußteil gleitende Kopfteil an dem Fußteil festgelegt werden kann. Dies ist insbesondere deshalb von Vorteil, weil die Einbauhöhe des Abdeckelementes gegenüber der Oberfläche des fertig ausgebildeten, beispielsweise mit Fliesen belegten, Duschbodens nur einmalig, d.h. im Zusammenhang mit dem erstmaligen Einbau, eingestellt werden muss. Nachdem die gewünschte Einbauhöhe festgelegt worden ist, kann diese Einbauhöhe fixiert werden indem das Fußteil und das Kopfteil mittels einer Schraube gegeneinander verspannt werden.

Wird im Folgenden, beispielsweise für Reinigungsarbeiten, das Abdeckelement entfernt, so besteht nicht die Gefahr, dass die eingestellte Höhe unbeabsichtigt verstellt wird. Das Abdeckelement mit fixierten Fußteilen kann vielmehr beliebig oft ein- und ausgebaut werden ohne dass sich die Höhe verstellt. Ein Lösen der Fixierung ist jedoch nicht ausgeschlossen, da dies beispielsweise zum Austausch defekter Teile erforderlich sein kann.

Die gesamte Höhenverstelleinrichtung samt Rinnenabdeckung kann aus Metall, insbesondere aus einem Edelstahl, oder/und Kunststoff hergestellt sein.

Die Verbindungen des Kopfteils mit dem Fußteil werden im Weiteren detailliert beschrieben. Die Erfindung ist in Ausführungsbeispielen anhand der Zeichnung näher erläutert. Die Figuren zeigen:
- Fig. 1: ein Wasserablaufelement mit Vertiefungen und eine aus den Vertiefungen herausgenommene Rinnenabdeckung mit angedeuteter Höhenverstelleinrichtung, in einer perspektivischen Ansicht;
- Fig. 2: einen Schnitt A-A gemäß Fig. 1;
- Fig. 3: schematisch eine Höhenverstelleinrichtung in ihrer ersten Ausführungsform, vor dem Einsetzen in die Vertiefung;
- Fig. 4: eine zweite Ausführungsform der Höhenverstelleinrichtung, in einem schematischen axialen Schnitt;
- Fig. 5: eine dritte Ausführungsform der Höhenverstelleinrichtung, in einem schematischen axialen Schnitt;
- Fig. 6: eine vierte Ausführungsform der Höhenverstelleinrichtung, mit einem Spreizkegel, in einem axialen Schnitt;
- Fig. 7: die Höhenverstelleinrichtung gemäß Fig. 5, gelagert auf Lastverteilungselementen (18), in einem axialen Schnitt;
- Figuren 8a und 8b: schematisch eine Höhenverstelleinrichtung mit Federrastung, im freien und verspannten Zustand;
- Figuren 8c und 8d: die Höhenverstelleinrichtung gemäß Figur 8a/b in Draufsicht von oben auf das Auflageelement und von unten auf das Fußteil;
- Figuren 9a bis 9c: eine Höhenverstelleinrichtung in einer Doppelkeilausführung, in Seitenansichten und in einer Stirnansicht;
- Fig. 9d: Anordnung einer Schraube an zwei Lagerbolzen der Höhenverstelleinrichtung gemäß Figur 9c;
- Figuren 10 und 11: jeweils ein Wasserablaufelement, mit superflachem Ablauf und mit einem Adaptermodul für den Standardablauf, in einer perspektivischen Ansicht von unten;
- Fig. 12: Anordnung einer Wasserablaufvorrichtung an einem Duschplatz, mit abgenommener Rinnenabdeckung,
- Fig. 13: schematisch das Kopfteil mit Außengewinde, versehen mit einer Messskala;
- Fig. 14: Anordnung der Wasserablaufvorrichtung gemäß Fig. 12, mit eingesetzter Rinnenabdeckung;
- Fig. 15: eine simple Ausführungsform der Höhenverstelleinrichtung, mit Tellerfuß, in einem schematischen axialen Schnitt;
- Fig. 16: eine aus Kunststoff bestehende Höhenverstelleinrichtung, eingeklemmt im Inneren der Rinnenabdeckung, in einer perspektivischen Ansicht von unten;
- Fig. 17: die Höhenverstelleinrichtung gemäß Fig. 16, in einer perspektivischen Ansicht von oben;
- Fig. 18: einen axialen Schnitt durch die Höhenverstelleinrichtung gemäß Fig. 17;
- Fig. 19: die Höhenverstelleinrichtung gemäß Fig. 17 nach dem Durchtrennen des Fußteils, in einer perspektivischen Ansicht von oben;
- Fig. 20: einen axialen Schnitt durch die Höhenverstelleinrichtung gemäß Fig. 19 und
- Fig. 21: die in Fig. 16 dargestellte Höhenverstelleinrichtung, eingebaut in die Vertiefung am Wasserablaufelement, in einer perspektivischen Ansicht von oben.

Begriffe, wie "oben", "obere", "unten", "untere", "unterste" etc. beziehen sich auf die in eine Grundplatte eines Duschplatzes eingebaute Wasserablaufvorrichtung, wie dies auch in der Zeichnung dargestellt ist.

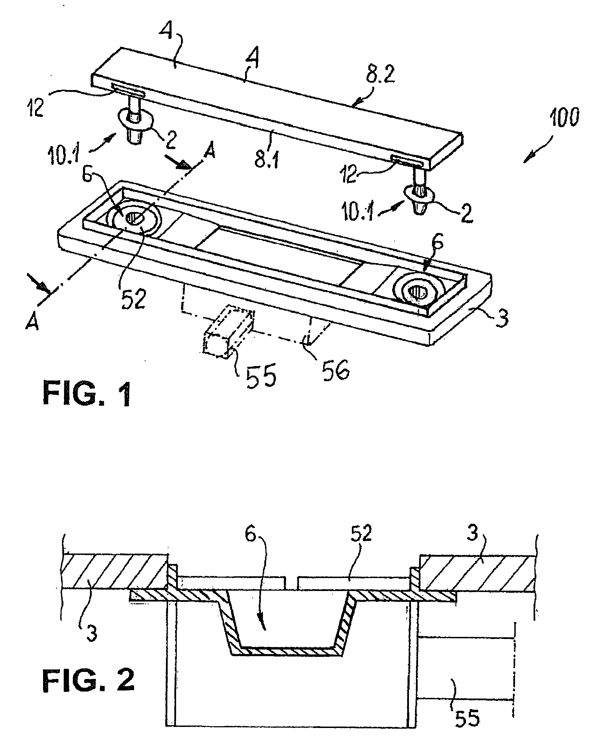

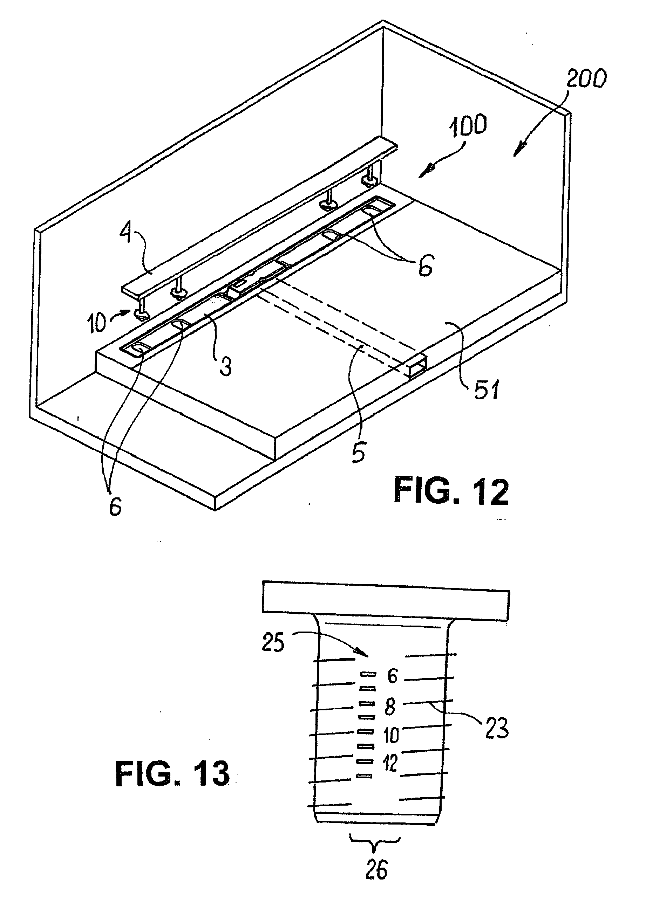

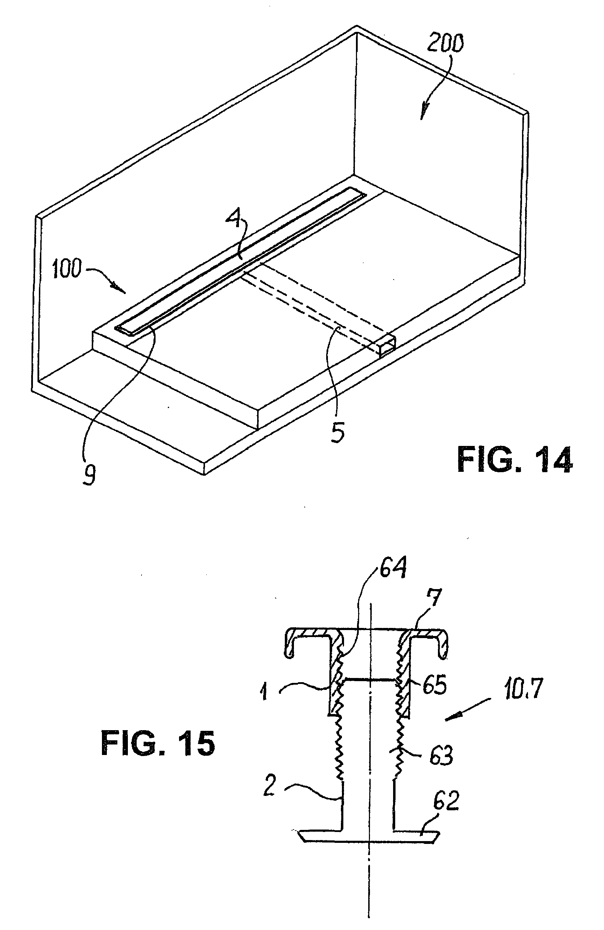

Eine in Fig. 1 dargestellte Wasserablaufvorrichtung 100 für einen in Fig. 12 schematisch gezeichneten, bodenebenen Duschplatz 200 setzt sich aus einem länglichen Wasserablaufelement 3, einer an das Wasserablaufelement angepassten Rinnenabdeckung 4 und zwei baugleichen Höhenverstelleinrichtungen 10.1 zusammen. In Fig. 12 sind vier Höhenverstelleinrichtungen 10.1 zu sehen. Die Anzahl von Höhenverstelleinrichtungen kann variieren, im Allgemeinen reichen zwei Höhenverstelleinrichtungen aus, welche vorzugsweise an beiden Enden der Rinnenabdeckung 4 platziert sein sollen. Ferner zeigt die Fig. 1 einen an ein Gehäuse 56 angeschlossenen und dort abgedichteten Ablaufstutzen 55 zur Verbindung mit einem in Figuren 12 und 14 mit Strichlinien angedeuteten, rechteckigen Ablaufrohr 5. Wie in Figur 1 angedeutet, kann der Ablaufstutzen 55 wahlweise einen runden oder mehreckigen, bevorzugt viereckigen Querschnitt aufweisen.

Das Wasserablaufelement 3 ist in bekannter Weise in eine Grundplatte 51 (vgl. Fig. 12) eingelassen, wobei die Bodenverkleidung der Grundplatte, beispielsweise Fliesen, mit der eingesetzten Rinnenabdeckung 4 in Flucht (vgl. Fig. 14) liegen. Dabei ist im Ausführungsbeispiel eine um die Rinnenabdeckung 4 herum verlaufende Öffnung 9 zur Einleitung von Abwasser in das Wasserablaufelement 3 vorgesehen. Alternativ oder zusätzlich zu der Öffnung 9 können auch andere, im Prinzip beliebige, Durchbrüche oder Öffnungen vorgesehen sein, die zur ein Einleitung von Abwasser in das Wasserablaufelement 3 geeignet sind.

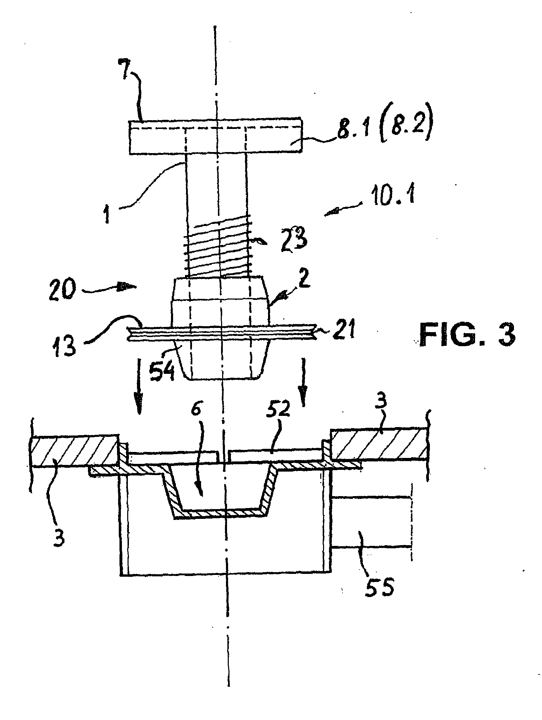

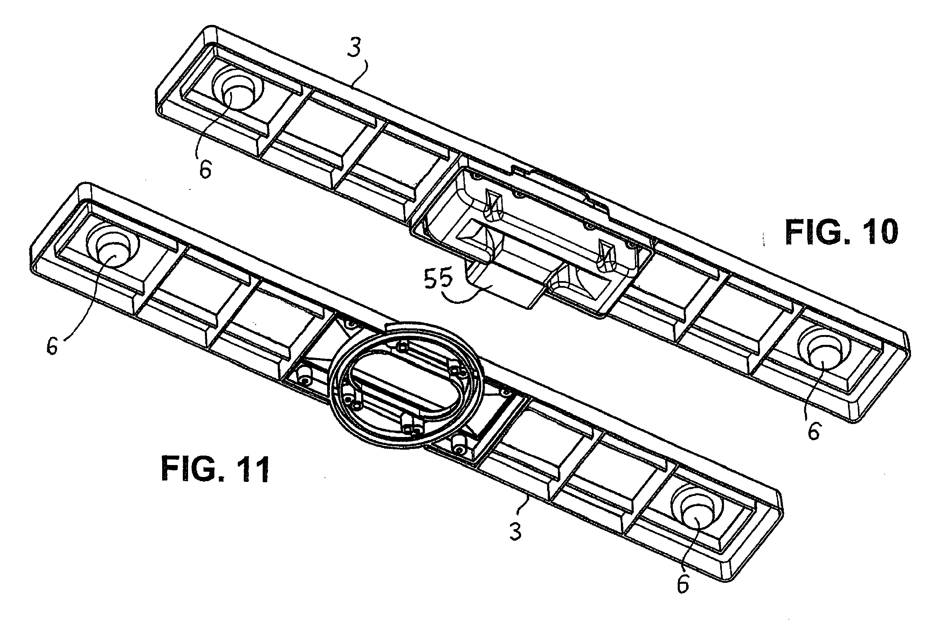

Das in Figuren 1, 10 und 11 gezeigte Wasserablaufelement 3 weist zwei Vertiefungen 6 zur Aufnahme von Höhenverstelleinrichtung auf, welche detailliert im Schnitt A-A (vgl. Fig. 2) dargestellt sind. Demnach ist die Vertiefung 6 zweistufig ausgebildet und an ein Fußteil 2 der Höhenverstelleinrichtung 10.1 (vgl. Fig. 3) angepasst. Die Vertiefung 6 weist eine obere, flache, ringförmige Mulde 52 und eine untere, konische Mulde 53 auf, die einem Fingerhut ähnelt (vgl. Figuren 10 und 11, von unten gesehen).

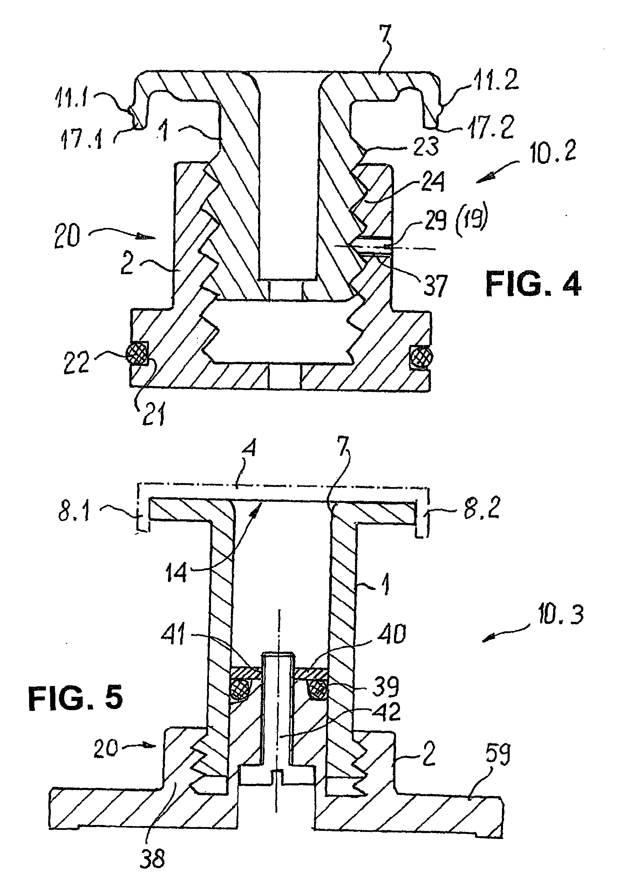

Wie der Fig. 3 zu entnehmen ist, weist das Fußteil 2 einen fassförmigen Hohlkörper 54 und einen zur Mulde 52 der Vertiefung 6 kompatiblen Tellerfuß 13 auf, wobei das unterste Teil des Hohlkörpers 54 zur unteren Mulde 53 der Vertiefung 6 spielfrei anpassbar ist. Am Tellerfuß 13 ist eine umlaufende Nut 21 zur Aufnahme eines in Fig. 4 gezeigten Dichtelementes 22. Das Dichtelement 21 wird beim Einlegen des Fußteils 2 in die Vertiefung 6 komprimiert.

Gemäß Fig. 13 ist am Außengewinde 23 eine Messskala 15 angeordnet, mit deren Hilfe die Höhenposition des Fußteils gegenüber dem Kopfteil eingestellt werden kann. Die Messskala 25 ist auf eine das Gewinde unterbrechende Fläche 26 eingetragen.

Optional kann das Fußteil 2 aus einem abgeschrägten Tellerfuß 62 mit einem nach oben ragendem Gewindebolzen 63 bestehen. Das Fußteil ist mit seinem Gewindebolzen 63 in eine Hülse 65 des Kopfteils mit Innengewinde 64 eingedreht. Eine solche simple Ausführungsform (Höhenverstelleinrichtung 10.7) ist in Fig. 15 dargestellt.

Das Kopfteil 1 bildet mit dem Fußteil 2 eine Schraubverbindung 20, welche auch beispielsweise in Figuren 4 und 5 zu sehen ist.

Die Höhenverstelleinrichtung 10.1 in ihrer einfachen Ausführungsform ist in Fig. 3 gezeigt. Die Höhenverstelleinrichtung 10.1 besteht aus dem besagten Fußteil 2 und einem Kopfteil 1, welches mit einem Außengewinde 23 zum Eindrehen in ein Innengewinde 24 (vgl. Fig. 4) des Fußteils 2 versehen ist. Das Kopfteil 1 trägt ein zum Inneren 14 der Rinnenabdeckung 4 (vgl. Fig. 4) kompatibles Auflageelement 7, welches zwei nach unten zeigende U-Schenkel 17.1, 17.2 aufweist. Gemäß Fig. 4 sind die beiden U-Schenkel 17.1, 17.2 jeweils mit einem nach außen ragenden Rastvorsprung 11.1, 11.2 versehen, welcher in eine in Fig. 1 gezeigte Aussparung 12 eines U-Schenkels 8.1, 8.2 der Rinnenabdeckung 4 eingreift.

Die Ausmaße des Auflageelementes 7 sind für eine lösbare Rast- oder Bajonetverbindung mit der Rinnenabdeckung 4 ausgelegt. Die Klemmverbindung hält die gesamte Höhenverstelleinrichtung 10.1 stabil im Inneren der Rinnenabdeckung. Zur Stabilität trägt auch das formschlüssig in die Vertiefung 6 eingelegte Fußteil 2 bei.

Eine in Fig. 4 gezeigte Höhenverstelleinrichtung 10.2 weist ein Feststellelement 19 auf, mit dem das Kopfteil 1 und Fußteil 2 gegeneinander verspannt werden können. Das Feststellelement ist eine beliebige Schraube, bevorzugt Madenschraube 29 mit Inbus-Sechskant-Antrieb, welche durch eine quer zum Innengewinde 24 des Fußteiles 2 angeordnete Gewindebohrung 37 gedreht werden kann.

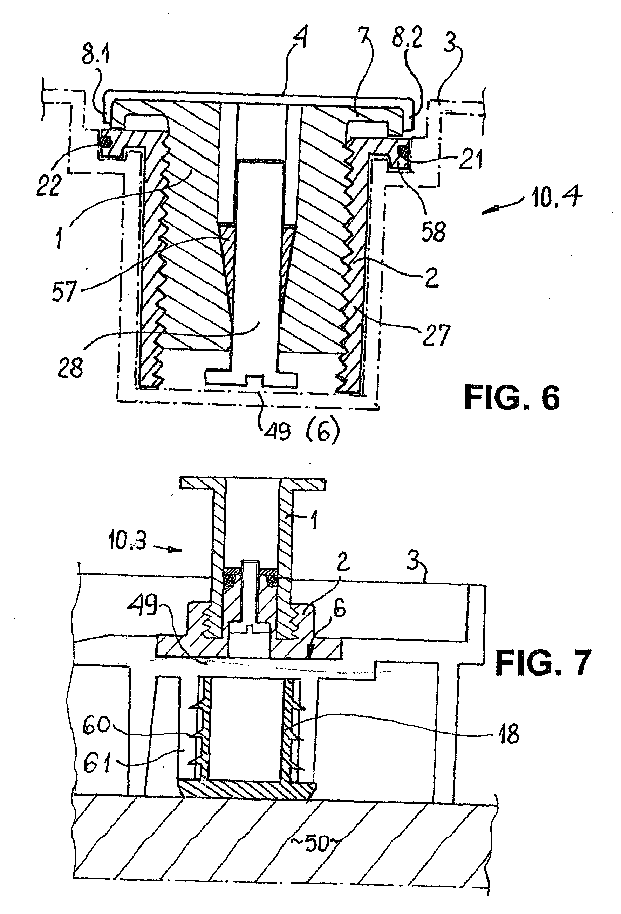

Gemäß Fig. 6 (Höhenverstelleinrichtung 10.4) ist das Feststellelement in Form einer Gewindebuchse 27 ausgeführt, mit der die Höheneinstellung justiert werden kann. Die Gewindebuchse kann auch zum zylindrischen Fußteil fungieren, welches auf das in der Rinnenabdeckung 4 eingeklemmte Kopfteil 1 aufgedreht wird. Die Vertiefung 6 des Wasserablaufelementes 3 ist zylindrisch und beinhaltet die zylindrische Gewindebuchse 27, die bis zu einem Boden 49 der Vertiefung eingelassen ist. Durch Anziehen einer axial verlaufenden Schraube 28 in einem Spreizkegel 57 wird die Gewindebuchse 27 gegen das Kopfteil 1 verspannt. Ein Dichtelement 22 ist in die umlaufende Nut 21 eines oberen Kragens 58 der Gewindebuchse 27 eingepresst.

In Fig. 5 ist eine Höhenverstelleinrichtung 10.3 dargestellt, bei der das Fußteil 2 eine in einen unteren Tellerfuß 59 übergehende Gewindehülse 38, ein elastisches Klemmelement 39, eine axial verlaufende Schraube 42 und eine quer zur Schraubenachse angeordnete Klemmplatte 40 mit einer Gewindebohrung 41 umfasst. Beim Anziehen der Schraube 42 wird eine Verformung des Klemmelementes 39 hervorgerufen, die die Verdrehsicherung für das Gewinde bewirkt.

Alle Höhenverstelleinrichtungen 10.1 bis 10.4 sind durch Schraubverbindungen 20 gebildet und verfügen über das Außengewinde 23 am Kopfteil 1 und Innengewinde 24 am Fußteil 2.

Gemäß Fig. 7 ist die Höhenverstelleinrichtungen 10.3 mit ihrem Fußteil 2 in die Vertiefung 6 platziert, wobei unterhalb der Vertiefung 6 ein Lastverteilungselement 18 in Form eines auf einem Boden 50 ruhenden Lamellenstopfens angeordnet ist. Der Lamellenstopfen greift mit seinen scharfen Lamellen 60 in eine aus Kunststoff bestehende Wandung 61 ein, welche senkrecht zum Boden 49 der Vertiefung 6 gerichtet ist.

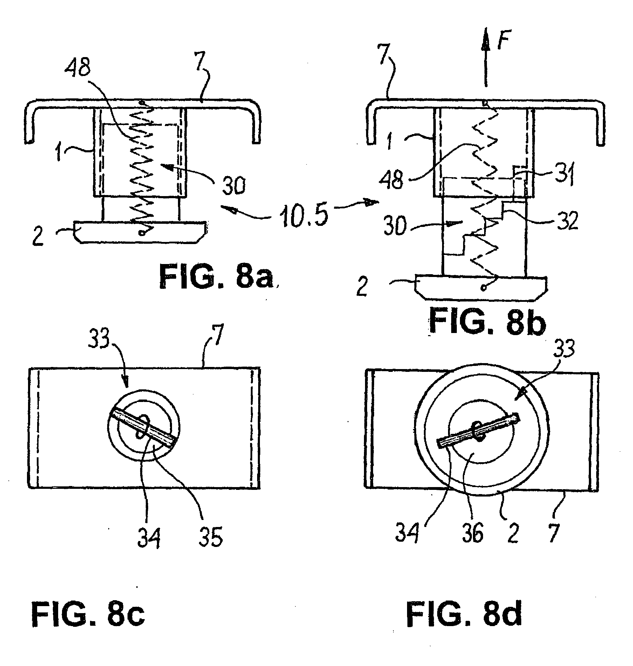

Die Figuren 8a, 8b, 8c und 8d stellen eine von der schraubenartigen abweichende Höhenverstelleinrichtung 10.5 dar. Bei der Höhenverstelleinrichtung 10.5 handelt es sich um eine federnde Rastverbindung 30 zwischen dem Kopfteil 1 und dem Fußteil 2. Das Kopfteil 1 und das Fußteil 2 verfügen über höhenversetzte Rastelemente 31; 32 und sind unter einer rechtwinklig zum Auflageelement 7, d. h. längsaxial gerichteten Federkraft F gegeneinander verspannt. Die Federkraft F wird durch Anziehen einer Feder 48 hervorgerufen, welche mittels am Auflageelement 7 und am Fußteil 2 angebrachten Haltevorrichtungen 33 gehalten ist. Als Feder 48 ist eine Schraubenzugfeder gewählt, die mit ihren beiden Enden an den Haltevorrichtungen 33 hakt.

Die Haltevorrichtungen 33 umfassen jeweils einen Querbolzen 34, an dem die Schraubenzugfeder aufgehängt ist, wobei der Querbolzen 34 eine Länge hat, die eine lichte Weite einer Öffnung 35 des Auflageelementes 7 und entsprechend einer Öffnung 36 des Fußteils 2 überschreitet.

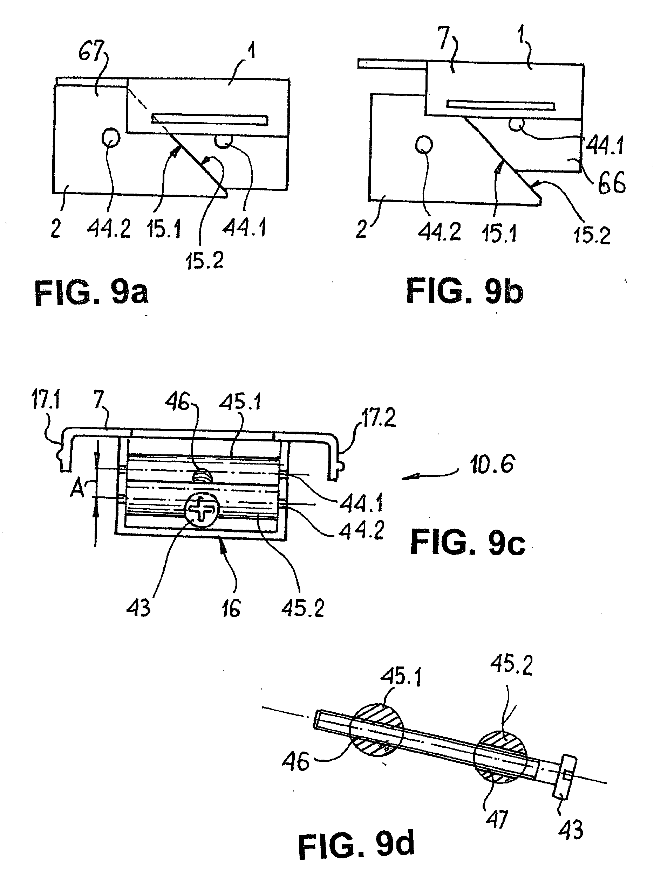

In Figuren 9a, 9b und 9c ist eine weitere, von der schraubenartigen abweichende Höhenverstelleinrichtung 10.6 mit rechteckigen Kopf- und Fußteilen dargestellt. Das Kopfteil 1 und das Fußteil 2 weisen miteinander kontaktierende Keilflächen 15.1, 15.2 auf, mit denen ein Auf- oder Abgleiten des Kopfteils 1 gegenüber dem Fußteil 2 und damit eine Höhenverstellung bewirkt werden kann. Zur Festlegung des Kopfteils 1 am Fußteil 2 ist eine Arretierung 16 vorgesehen, umfassend eine Schraube 43 und zwei senkrecht zu den U- Schenkeln 17.1, 17.2 des Auflageelementes 7 verlaufende Drehlagerungen 44.1; 44.2 mit jeweils einem Lagerbolzen 45.1; 45.2. Die eine Drehlagerung (44.1) ist an zwei gegenüber liegenden Seitenwänden 66 des Kopfteils 1 und die andere Drehlagerung (44.2) an ebenso gegenüber liegenden Seitenwänden 67 des Fußteils 2 befestigt.

Wie es aus den Figuren 9a und 9b ersichtlich, sind die Keilflächen 15.1, 15.2 jeweils durch geneigte Kanten der Seitenwände 66, 67 des Kopfteils 1 und des Fußteils 2 gebildet.

Der am Fußteil 2 angeordnete Lagerbolzen 45.2 weist eine Durchgangsbohrung 47 auf, welche geringfügig größer ist als der Außendurchmesser der Schraube 43, so dass die Schraube 43 entlang der Durchgangsbohrung 47 verschoben werden kann. Der am Kopfteil 1 angeordnete Lagerbolzen 45.1 weist eine Gewindebohrung 46 (vgl. Fig. 9d) zur Aufnahme der besagten Schraube auf.

Auf dieser Weise sind das Kopfteil 1 und das Fußteil 2 miteinander verbunden. Wird mit der Schraube 43 gedreht, gleitet das Kopfteil 1 über die keilfläche 15.2 des Fußteils 2 und zugleich verändert sich ein Abstand A (vgl. Fig. 9c) zwischen den Mittellinien der Lagerbolzen 45.1; 45.2. Nach dem Anziehen der Schraube 43 wird der gewünschte Abstand A festgelegt.

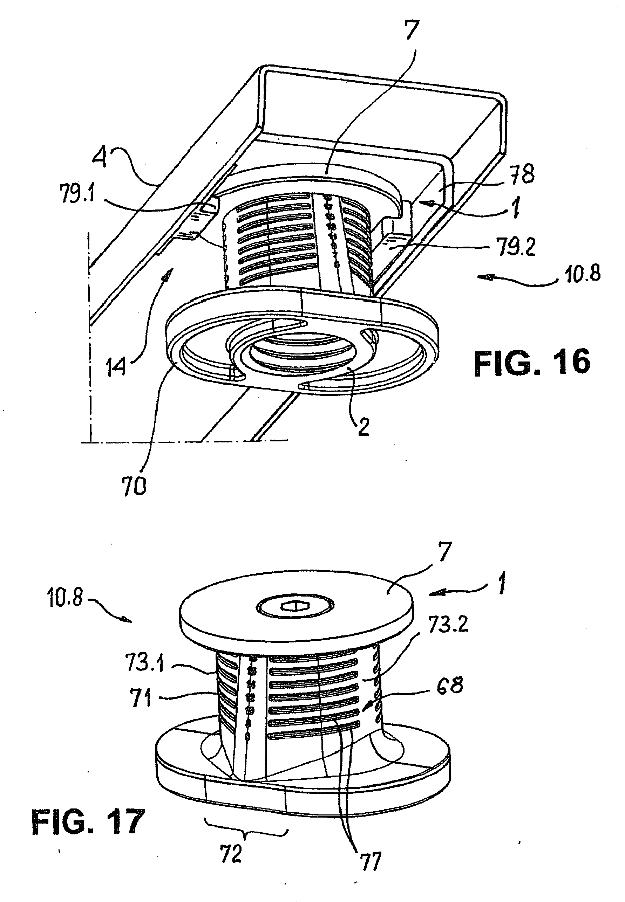

Schließlich ist den Figuren 16 bis 21 eine weitere bevorzugte Ausführungsform (Bezugszahl 10.8) der die Schraubverbindung 20 aufweisenden Höhenverstelleinrichtung dargestellt, bei der sowohl das Kopfteil 1 als auch das Fußteil 2 aus Kunststoff hergestellt ist. Kopf- und/oder Fußteil können auch aus einem anderen Material, beispielsweise einem Metall, insbesondere aus einem Edelstahl, hergestellt sein.

Das Fußteil 2 weist einen etwa ovalen Tellerfuß 70 und einen über den Tellerfuß 70 ragenden Körper 71 auf, wobei an den längeren Seiten des ovalen Tellerfußes 70 jeweils ein gerader Abschnitt 72 vorgesehen ist. Dabei ist der Körper 71 stromlinienförmig ausgebildet derart, dass das Abwasser ihn entlang seiner beiden schiffrumpfartig (wie Back- und Steuerbord) geformten Seitenflächen 73.1, 73.2 umströmen kann.

Das Auflageelement 7 des Kopfteils 1 ist kreisförmig und geht in eine relativ niedrige Hülse 75 mit dem Außengewinde 23 über.

Im Einbauzustand (vgl. Fig. 16) wird das kreisförmige Auflageelement 7 des Kopfteils 1 über ein C-förmiges Zwischenstück 78, das im Ausführungsbeispiel aus Kunststoff hergestellt ist, aber auch aus einem Metall, insbesondere einem Edelstahl hergestellt sein kann, im Inneren 14 der Rinnenabdeckung 4 gehalten. Das Zwischenstück 78 verfügt über zwei seitliche Flügelteile 79.1, 79.2, in die das Auflageelement 7 hineingeschoben werden kann.

Die Höhenverstelleinrichtung 10.8 beinhaltet die Schraubverbindung 20 mit dem Außengewinde 23 am Kopfteil 1 und dem Innengewinde 24 am Fußteil 2, wie es auch in Fig. 4 zu sehen ist, sowie das Feststellelement in Form des Spreizkegels 57, welcher mittels der Schraube 28 das Fußteil 2 gegen das Kopfteil 1 verspannt.

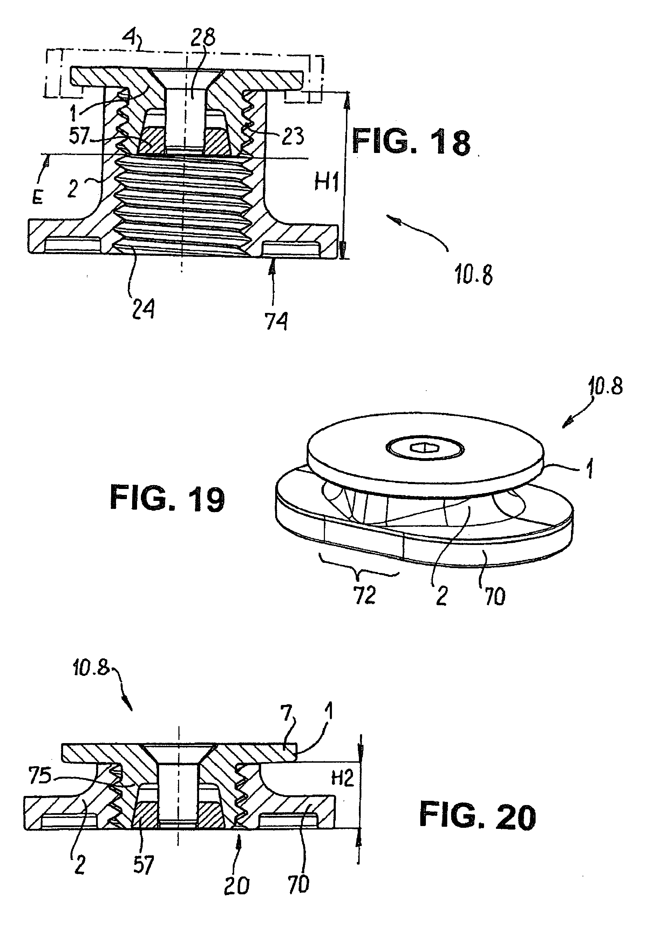

Das in Fig. 18 gezeigte Fußteil 2 weist eine maximale Höhe H1 auf, welche an die maximale Einbauhöhe der Wasserablaufvorrichtung angepasst ist.

Um das Fußteil 2 an eine minimale Einbauhöhe der Wasserablaufvorrichtung anpassen zu können, wird der Körper 71 einfach entlang einer in Fig. 18 angedeuteten Ebene E abgesägt, welche parallel zu einer Sichtfläche 69 der Rinnenabdeckung 4 bzw. zu einer Basisfläche 74 des Tellerfußes 70 verläuft. Nach dem Absägen nimmt das Fußteil 2 ein kleineres Höhenmaß (Höhe H2; vgl. Fig. 20) an. Zur Vereinfachung des Abtrennens sind an beiden Seitenflächen 73.1, 73.2 des Körpers 71 Rillen 77 vorgesehen, in welchen das Werkzeug, in den vorliegenden Fall eine Säge, geführt werden kann.

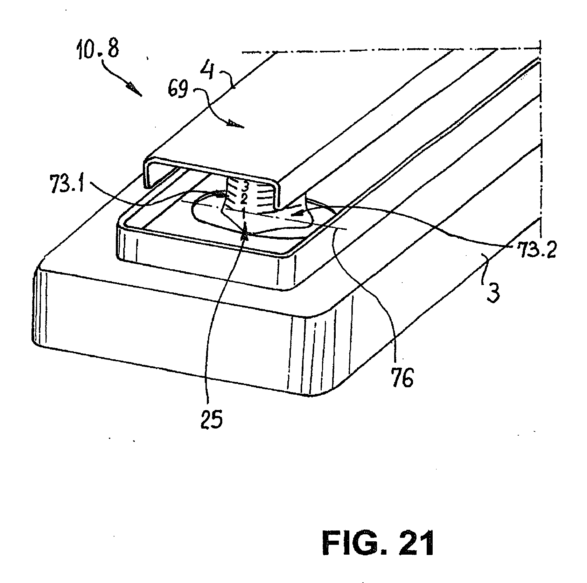

Wie der Fig. 21 zu entnehmen ist, ist die am Wasserablaufelement 3 eingebrachte Vertiefung 6 ebenso, wie der Tellerfuß 70, oval, wobei ihre Längsachse 76 quer zur Längsausrichtung der Rinnenabdeckung 4 verläuft. Die ovale Form der Vertiefung 6 und des Tellerfußes 70 verleiht der in die Vertiefung 6 eingesetzten Höhenverstelleinrichtung 10.8 eine ausreichende Lagestabilität.

Wie die Figuren 10 und 11 zeigen, ist das die erfindungsgemäßen Vertiefungen 6 aufweisende Wasserablaufelement 3 sowohl für eine superflache Wasserablaufvorrichtung mit rechteckigem Ablaufrohr 55 als auch für eine Standardausführung mit Anschluss an einen runden Ablauftopf (vgl. Fig. 11) geeignet.

**Bezugszeichenliste:**

| | |
|---|---|
| 1 | Kopfteil |
| 2 | Fußteil |
| 3 | Wasserablaufelement |
| 4 | Rinnenabdeckung |
| 5 | Ablaufrohr |
| 6 | Vertiefung |
| 7 | Auflageelement |
| 8.1, 8.2 | U-Schenkel (v.4) |
| 9 | Öffnung |
| 10.1; 10.2; 10.3; 10.4; 10.5; 10.6; 10.7; 10.8 | Höhenverstelleinrichtung |
| 11.1, 11.2 | Rastvorsprung |
| 12 | Aussparung |
| 13 | Tellerfuß |
| 14 | Innere (v.4) |
| 15.1, 15.2 | Keilfläche |
| 16 | Arretierung |
| 17.1, 17.2 | U-Schenkel (v.7) |
| 18 | Lastverteilungselement |
| 19 | Feststellelement |
| 20 | Schraubverbindung |
| 21 | Nut |
| 22 | Dichtelement |
| 23 | Außengewinde |
| 24 | Innengewinde |
| 25 | Messskala |
| 26 | Fläche |
| 27 | Gewindebuchse |
| 28 | Schraube |
| 29 | Madenschraube |
| 30 | Rastverbindung |
| 31; 32 | Rastelement |
| 33 | Haltevorrichtung (Schraubenzugfeder) |
| 34 | Querbolzen |
| 35 | Öffnung (v.7) |
| 36 | Öffnung (v.2) |
| 37 | Gewindebohrung |
| 38 | Gewindehülse |
| 39 | Klemmelement |
| 40 | Klemmplatte |
| 41 | Gewindebohrung |
| 42 | Schraube |
| 43 | Schraube |
| 44.1, 44.2 | Drehlagerung |
| 45.1, 45.2 | Lagerbolzen |
| 46 | Gewindebohrung |
| 47 | Durchgangsbohrung |
| 48 | Feder |
| 49 | Boden (v. 6; vgl. Fig. 6) |
| 50 | Boden |
| 51 | Grundplatte |
| 52, 53 | Mulde 8v. 6) |
| 54 | Hohlkörper |
| 55 | Ablaufstutzen |
| 56 | Gehäuse |
| 57 | Sicherungskegel |
| 58 | Kragen |
| 59 | Tellerfuß |
| 60 | Lamelle |
| 61 | Wandung |
| 62 | Tellerfuß |
| 63 | Gewindebolze |
| 64 | Innengewinde |
| 65 | Hülse |
| 66, 67 | Seitenwand |
| 68 | Mantel |
| 69 | Sichtfläche (v. 4) |
| 70 | Tellerfuß |
| 71 | Körper |
| 72 | Abschnitt |
| 73.1, 73.2 | Seitenfläche (v. 71) |
| 74 | Basisfläche |
| 75 | Hülse |
| 76 | Längsachse |
| 77 | Rillen |
| 78 | Zwischenstück |
| 79.1, 79.2 | Flügelteil |
| **100** | **Wasserablaufvorrichtung** |
| 200 | Duschplatz |
| A | Abstand (zwischen den Lagerbolzen) |
| A-A | Schnitt |
| E | Ebene |
| H1 | max. Höhe |
| H2 | Min. Höhe |
| F | Federkraft |

## Patentansprüche

1. Wasserablaufvorrichtung (100) für eine sanitäre Anlage, wie einen bodenebenen Duschplatz, umfassend
- ein im montierten Zustand nach oben hin offenes, längliches, wannenförmiges Wasserablaufelement (3), welches strömungstechnisch mit einem Ablaufrohr (5) verbunden oder verbindbar ist;
- eine in das Wasserablaufelement (3) eingesetzte Rinnenabdeckung (4), die im montierten Zustand das Wasserablaufelement (3) nach oben hin abdeckt, wobei in oder an der Rinnenabdeckung mindestens eine Öffnung (9) zur Einleitung von Abwasser in das Wasserablaufelement (3) verbleibt;
- wenigstens eine Höhenverstelleinrichtung (10.1; 10.2; 10.3; 10.4; 10.5; 10.6; 10.7; 10.8) für die Rinnenabdeckung (4), umfassend ein Fußteil (2) und ein gegenüber dem Fußteil (2) höhenverstellbares Kopfteil (1),
**dadurch gekennzeichnet, dass**
- das Kopfteil (1) ein zur Rinnenabdeckung (4) kompatibles, dem Fußteil (2) abgewandtes Auflageelement (7) aufweist, welches mit der Rinnenabdeckung (4) kraft- oder formschlüssig verbunden ist,
- das Wasserablaufelement (3) wenigstens eine Vertiefung (6) aufweist, an der sich das Fußteil (2) lose abstützt,
- wobei die gesamte Höhenverstelleinrichtung (10.1; 10.2; 10.3; 10.4; 10.5; 10.6; 10.7; 10.8) mit der Rinnenabdeckung (4) gemeinsam aus dem rinnenförmigen Wasserablaufelement (3) entnehmbar und in das Wasserablaufelement (3) einsetzbar ist.

2. Wasserablaufvorrichtung (100) nach Anspruch 1, **dadurch gekennzeichnet, dass** die Rinnenabdeckung (4) eben und streifenförmig oder profiliert, bevorzugt in Form eines U- oder H-Profils ist.

3. Wasserablaufvorrichtung (100) nach Anspruch 1, **dadurch gekennzeichnet, dass** das Kopfteil (1) lösbar mit der Rinnenabdeckung (4) verbunden ist.

4. Wasserablaufvorrichtung (100) nach einem der Ansprüche 1 bis 3, **dadurch gekennzeichnet, dass** das Auflageelement (7) klemmend und/oder einrastend in das Innere (14) der Rinnenabdeckung (4) eingreift.

5. Wasserablaufvorrichtung (100) nach einem der Ansprüche 1 bis 4, **dadurch gekennzeichnet, dass** das Auflageelement (7) Abschnitt eines U-Profils ist, an dessen wenigstens einem U-Schenkel (17.1, 17.2) wenigstens ein nach außen ragender Rastvorsprung (11.1, 11.2) angeordnet ist, mit welchem eine Druckkraft gegen einen U-Schenkel (8.1, 8.2) der Rinnenabdeckung (4) ausgeübt ist.

6. Wasserablaufvorrichtung (100) nach Anspruch 5, **dadurch gekennzeichnet, dass** an wenigstens einem U-Schenkel (8.1, 8.2) der Rinnenabdeckung (4) wenigstens eine Aussparung (12) eingearbeitet ist, in die der Rastvorsprung (11.1, 11.2) eingreift.

7. Wasserablaufvorrichtung (100) nach Anspruch 1, **dadurch gekennzeichnet, dass** die Vertiefung (6) wenigstens zweistufig ist.

8. Wasserablaufvorrichtung (100) nach einem der vorhergehenden Ansprüche, **dadurch gekennzeichnet, dass** die Vertiefung (6) in Projektion auf das Wasserablaufelement (3) wenigstens teilweise polygonal, kreisrund oder oval ist.

9. Wasserablaufvorrichtung (100) nach einem der vorhergehenden Ansprüche, **dadurch gekennzeichnet, dass** die Fußteile (2) und/oder die Vertiefungen (6) wenigstens bereichsweise konisch ausgebildet sind.

10. Wasserablaufvorrichtung (100) nach einem der vorhergehenden Ansprüche, **dadurch gekennzeichnet, dass** das Fußteil (2) spielfrei an die Vertiefung (6) angepasst ist.

11. Wasserablaufvorrichtung (100) nach einem der vorhergehenden Ansprüche, **dadurch gekennzeichnet, dass** die Fußteile (2) und/oder die Vertiefungen (6) wenigstens eine Nut (21) umfassen, welche zur Aufnahme eines Dichtelementes (22) geeignet ist.

12. Wasserablaufvorrichtung (100) nach einem der vorhergehenden Ansprüche, **dadurch gekennzeichnet, dass** die Fußteile (2) auf Lastverteilungselementen (18) gelagert sind.

13. Wasserablaufvorrichtung (100) nach einem der vorhergehenden Ansprüche, **dadurch gekennzeichnet, dass** das Kopfteil (1) mit dem Fußteil (2) eine Schraubverbindung (20) bildet.

14. Wasserablaufvorrichtung (100) nach Anspruch 13, **dadurch gekennzeichnet, dass** das Kopfteil (1) und das Fußteil (2) der Höhenverstelleinrichtung (10.1; 10.2; 10.3; 10.4; 10.8) über ineinander greifende Gewindeelemente verstellbar sind, wobei vorzugsweise das Kopfteil (1) ein Außengewinde (23) und das Fußteil (2) ein Innengewinde (24) aufweist.

15. Wasserablaufvorrichtung (100) nach Anspruch 13 oder 14, **dadurch gekennzeichnet, dass** am Kopfteil (1) oder Fußteil (2) eine Messskala (25) eingebracht ist.

16. Wasserablaufvorrichtung (100) nach Anspruch 15, **dadurch gekennzeichnet, dass** die Messskala (25) an einer Fläche (26) oder an einem gewindefreien Mantel (68) des Fußteils (2) oder Kopfteils (1) angeordnet ist.

17. Wasserablaufvorrichtung (100) nach Anspruch 13, **dadurch gekennzeichnet, dass** bei der Schraubverbindung (20) ein Feststellelement (19) vorgesehen ist, mit welchem das Kopfteil (1) gegenüber dem Fußteil (2) fixiert werden kann.

18. Wasserablaufvorrichtung (100) nach Ansprüchen 13 bis 17, **dadurch gekennzeichnet, dass** das Kopfteil (1) oder Fußteil (2) in seiner Höhe einstellbar ist, indem das Kopfteil (1) oder Fußteil (2) entlang einer Rille 77 durchtrennbar ist, welche durch eine Ebene (E) definiert ist, die planparallel zu einer Sichtfläche (69) der einmontierten Rinnenabdeckung (4) verläuft.

19. Wasserablaufvorrichtung (100) nach Anspruch 17 oder 18, **dadurch gekennzeichnet, dass** es sich bei dem Feststellelement (19) um eine Gewindebuchse (27) oder um einen Spreizkegel (57) handelt, welche (-r) mittels einer Schraube (28) das Fußteil (2) gegen das Kopfteil (1) verspannt.

20. Wasserablaufvorrichtung (100) nach Anspruch 17, **dadurch gekennzeichnet, dass** das Feststellelement (19) eine Madenschraube (29) ist, welche durch eine quer zum Innengewinde (24) des Fußteiles (2) verlaufende Gewindebohrung (37) gedreht werden kann, bis dass die Madenschraube (29) eine Anpresskraft gegen das Kopfteil (1) ausübt, so dass Kopfteil (1) und Fußteil (2) gegeneinander verspannt werden.

21. Wasserablaufvorrichtung (100) nach einem der vorhergehenden Ansprüche, **dadurch gekennzeichnet, dass** das Kopfteil (1) mit dem Fußteil (2) eine Rastverbindung (30) bilden, bei welcher das Kopfteil (1) und das Fußteil (2) unter einer rechtwinklig zum Auflageelement (7) gerichteten Federkraft (F) gegeneinander verspannt sind, wobei das Kopfteil (1) und das Fußteil (2) jeweils wenigstens zwei höhenversetzte Rastelemente (31; 32) aufweisen.

22. Wasserablaufvorrichtung (100) nach Anspruch 21, **dadurch gekennzeichnet, dass** das Kopfteil (1) und das Fußteil (2) der Höhenverstelleinrichtung (10.5) jeweils eine Haltevorrichtung (33) für eine Feder (48), bevorzugt Schraubenzugfeder, aufweisen.

23. Wasserablaufvorrichtung (100) nach Anspruch 22, **dadurch gekennzeichnet, dass** die Haltevorrichtung (33) einen Splint bzw. Querbolzen (34) umfasst, an welchem die Schraubenzugfeder aufgehängt ist, wobei der Querbolzen (34) länger als eine lichte Weite einer Öffnung (35) des Auflageelementes (7) und entsprechend einer Öffnung (36) des Fußteils (2) ist.

24. Wasserablaufvorrichtung (100) nach einem der vorhergehenden Ansprüche, **dadurch gekennzeichnet, dass** das Fußteil (2) eine Gewindehülse (38), ein Klemmelement (39), eine Klemmplatte (40) mit einer Gewindebohrung (41) und eine Schraube (42) umfasst, wobei durch Anziehen der Schraube (42) eine Verformung des Klemmelementes (39) erfolgt, die eine Verdrehsicherung des Gewindes bewirkt.

25. Wasserablaufvorrichtung (100) nach einem der vorhergehenden Ansprüche, **dadurch gekennzeichnet, dass** das Kopfteil (1) und das Fußteil (2) miteinander kontaktierende Keilflächen (15.1, 15.2) aufweisen, welche über eine Arretierung (16) zueinander festlegbar sind.

26. Wasserablaufvorrichtung (100) nach Anspruch 25, **dadurch gekennzeichnet, dass**
- die Arretierung (16) eine Schraube (43) und zwei senkrecht zu den U- Schenkeln (17.1, 17.2) des Auflageelementes (7) angeordnete Drehlagerungen (44.1; 44.2) mit jeweils einem Lagerbolzen (45.1; 45.2) umfasst, wobei die eine Drehlagerung (44.1) am Kopfteil (1) und die andere Drehlagerung (44.2) am Fußteil (2) angeordnet ist,
- der eine Lagerbolzen eine Gewindebohrung (46) zur Aufnahme der Schraube (43) und der andere Lagerbolzen eine Durchgangsbohrung (47) umfasst, welche geringfügig größer ist als der Gewindedurchmesser der Schraube (43),
- das Kopfteil (1) und das Fußteil (2) über die Schraube (43) miteinander verbunden sind,
so dass das Drehen der Schraube (43) eine Veränderung eines Abstandes (A) zwischen den Mittellinien der Lagerbolzen (45.1; 45.2) und damit ein Auf- oder Abgleiten des Kopfteiles (1) gegenüber dem Fußteil (2) bewirkt.
